# EUROPÄISCHE PATENTSCHRIFT

(11) **EP 1 819 951 B1**
(45) Veröffentlichungstag und Bekanntmachung des Hinweises auf die Patenterteilung: **16.02.2011**
(21) Anmeldenummer: 04803747.7
(22) Anmeldetag: 10.12.2004
(51) Int. Cl.: F16J 15/08

(54) **FLACHDICHTUNG**
FLAT SEAL
GARNITURE D'ETANCHEITE PLATE

(43) Veröffentlichungstag der Anmeldung: 22.08.2007
(73) Patentinhaber: ElringKlinger AG, 72581 Dettingen (DE)
(72) Erfinder: DIEZ, Armin, 73252 Lenningen (DE); BIEDERMANN, Martin, 72581 Dettingen/Erms (DE)
(74) Vertreter: Haecker, Walter
(86) Internationale Anmeldenummer: PCT/EP2004/014103
(87) Internationale Veröffentlichungsnummer: WO 2006/061042

(56) Entgegenhaltungen:
- EP-A- 0 757 195
- EP-A- 1 148 276
- EP-A- 1 291 561
- EP-A1- 1 714 059
- WO-A1-2005/078322
- US-A- 5 568 932

## Beschreibung

Die Erfindung betrifft eine mindestens im wesentlichen metallische Flachdichtung, insbesondere eine Zylinderkopfdichtung, und zwar eine Flachdichtung mit einer Dichtungsplatte, in der wenigstens eine Durchgangsöffnung vorgesehen ist und die mindestens in der Umgebung dieser Durchgangsöffnung wenigstens vier übereinander angeordnete Metallblechlagen aufweist, wobei mindestens drei dieser Blechlagen jeweils mindestens eine die Durchgangsöffnung umschließende, höhenelastische Abdichtsicke aufweisen und diese Abdichtsicken übereinander angeordnet sind, und wobei für diese Abdichtsicken eine deren Verformung in Richtung senkrecht zur Dichtungsplattenebene (Abflachung) begrenzende, einen Verformungsstopper aufweisende Verformungsbegrenzungsvorrichtung vorgesehen ist.

Wenn vorstehend von einer höhenelastischen Abdichtsicke die Rede ist, so soll dies bedeuten, daß bei einer Pressung der Sicke (beim Einbau der Dichtung und/oder im Betrieb des die Flachdichtung enthaltenden Aggregats) die Höhe der Abdichtsicke vermindert wird, und zwar durch eine elastische und damit reversible Verformung des die Abdichtsicke enthaltenden Bereichs der betreffenden Blechlage.

Der Einfachheit halber wird im folgenden ein Fachbegriff verwendet werden: Vor allem bei Zylinderkopfdichtungen der vorstehend erwähnten Art werden höhenelastische Abdichtsicken aufweisende Blechlagen üblicherweise als Funktionslagen bezeichnet, das heißt eine Funktionslage hat stets eine oder mehrere höhenelastische Abdichtsicken, welche eine oder mehrere Durchgangsöffnungen umschließen, um um diese Durchgangsöffnungen herum abzudichten, wenn die Flachdichtung zwischen Maschinenbauteilen, wie einem Zylinderkopf und einem Motorblock, eingebaut und eingespannt ist.

Vor allem Zylinderkopfdichtungen werden im Motorbetrieb dynamisch belastet, das heißt die auf eine Zylinderkopfdichtung einwirkenden Pressungskräfte sind nicht zeitlich konstant, so daß auch die durch die Pressungskräfte hervorgerufene Abflachung einer Abdichtsicke zeitlich variiert. Damit dann im Motorbetrieb die für die Dichtungsfunktion erforderliche Höhenelastizität der Abdichtsicke gewährleistet ist und keine Dauerbrüche in Folge der dynamischen Belastung der Abdichtsicke auftreten, muß eine übermäßige Abflachung der Abdichtsicke verhindert werden, was durch eine Verformungsbegrenzungsvorrichtung bewirkt wird; derartige Verformungsbegrenzungsvorrichtungen bestehen bei bekannten Zylinderkopfdichtungen zum Beispiel aus einem Ringbereich einer Blechlage, auf dem ein aus einem Blech ausgestanzter kreisringförmiger sogenannter Stopper zum Beispiel durch Schweißen befestigt ist; alternativ kann die Blechlage durch einen Prägevorgang mit beispielsweise rippenförmigen oder noppenförmigen Erhebungen versehen werden, oder wird um die abzudichtende Durchgangsöffnung herum ein ringförmiger Bereich der Blechlage auf letztere zurück umgefaltet und so ein verdickter Bereich in Form eines sogenannten Falzbördelrings erzeugt.

US 5,568,932 offenbart auch zylinderkopfdichtungen mit verdickten bereichen, jedoch um zu bewirken, daß bei eingebauter zylinderkopfdichtung unmittelbar um die Brennraum-Durchgangsöffnung herum auf die zylinderkopfdichtung die höchsten Pressungskrüfte einwirken.

Bei bekannten Zylinderkopfdichtungen mit wenigstens drei Funktionslagen und damit mindestens drei (übereinander liegenden) vor einer übermäßigen Abflachung zu schützenden Abdichtsicken sind mindestens zwei Verformungsbegrenzungsvorrichtungen bzw. Stopper vorgesehen, wobei der eine Stopper die Abdichtsicken zweier Funktionslagen vor einer übermäßigen Abflachung schützt und der andere Stopper eine übermäßige Abflachung der dritten Funktionslage verhindert - weisen zwei einander unmittelbar benachbarte Funktionslagen Abdichtsicken auf, von denen jede in Richtung auf die jeweils andere Funktionslage vorspringt, kann ein Stopper auf einer der beiden Funk-tionslagen vorgesehen sein, und zwar auf derjenigen Seite dieser Funktionslage, die der anderen Funktionslage zugekehrt ist, und ein zweiter Stopper ist an der dritten Funktionslage vorgesehen, um deren Abdichtsicke vor einer unzulässig hohen Verformung zu schützen. Alternativ kann zwischen der dritten

Funktionslagen und den beiden anderen Funktionslagen eine Blechlage ohne Abdichtsicke angeordnet werden, die neben der Abdichtsicke der dritten Funktionslage (in einer Draufsicht auf die Flachdichtung) eine kreisringförmige Verdickung aufweist, welche einen in Richtung auf die dritte Funktionslage vorstehenden Vorsprung und damit einen Stopper für die Abdichtsicke der dritten Funktionslage bildet.

WO 2005/078322A1 ist stand der technik nach artikel 54(3) EPÜ und offenbart eine Flachdichtung mit Stopperanordnung, wobei eine vierte Blechlage, einer Stopperlage unmittelbar benachbart ist und eine Abdichtsicke aufweist, welche in Rihtung von der Stopperlage weg vorspringt. Der Erfindung lag die Aufgabe zugrunde, den Aufbau von Flachdichtungen der eingangs erwähnten Art mit mindestens drei Funktionslagen zu vereinfachen.

Erfindungsgemäß wird diese aufgabe durch die merkmale des anspruchs 1 gelöst.

Nach dem Grundkonzept der vorliegenden Erfindung läßt sich die Anzahl der erforderlichen Verformungsbegrenzungsvorrichtungen bzw. Stopper dadurch verringern und somit der Aufbau der Flachdichtung vereinfachen, daß für zwei einander unmittelbar benachbarte Funktionslagen ein einziger Stopper vorgesehen wird, welcher außerhalb des von diesen beiden Funktionslagen gebildeten Lagenpaares liegt (das heißt unterhalb oder oberhalb dieses Lagenpaares), und daß die diesem Stopper unmittelbar benachbarte erste Funktionslage dieses Lagenpaares neben ihrer Abdichtsicke im Bereich des Stoppers (in einer Draufsicht auf die Flachdichtung gesehen) mit einem in Richtung auf die andere, zweite Funktionslage vorspringenden und bei eingebauter und gepreßter Flachdichtung durch den Stopper abgestützten Vorsprung versehen wird, welcher als Stopper für den Schutz der Abdichtsicke der zweiten Funktionslage wirkt und insbesondere durch Verformen der ersten Funktionslage erzeugt wurde.

Erfindungsgemäß wird eine Flachdichtung der eingangs erwähnten Art insbesondere so ausgebildet, daß die beiden mit Abdichtsicken versehenen, ein Lagenpaar bildenden Blechlagen einander unmittelbar benachbart sind, der Stopper außerhalb des Lagenpaares, jedoch einer ersten Blechlage des Lagenpaares unmittelbar benachbart angeordnet ist, und daß diese erste Blechlage neben ihrer Abdichtsicke eine sich in Umfangsrichtung der Durchgangsöffnung erstreckende Verformung, insbesondere eine Abkröpfung, aufweist, welche im Bereich des Stoppers einen in Richtung auf die zweite Blechlage des Lagenpaares vorspringenden Vorsprung bildet, so daß ein sich an die Verformung anschließender Ringbereich der ersten Blechlage zusammen mit dem Stopper eine für die Abdichtsicken beider Blechlagen des Lagenpaares wirksame Verformungsbegrenzungsvorrichtung bildet.

Wenn vorstehend davon die Rede ist, daß der besagte Ringbereich der ersten Blechlage zusammen mit dem Stopper eine Verformungsbegrenzungsvorrichtung bildet, so bedeutet dies nicht, daß dieser Ringbereich und der Stopper von zwei Teilen gebildet werden müssen; so ist es zum Beispiel möglich, den Ringbereich durch einen Prägevorgang mit beispielsweise rippen- oder noppenförmigen Erhebungen zu versehen, so daß dieser Ringbereich eine größere Dicke aufweist als die originäre Dicke der zu diesem Ringbereich gehörenden Blechlage; grenzt der Ringbereich unmittelbar an die abzudichtende Durchgangsöffnung an, kann die diesen Ringbereich bildende Blechlage um die Durchgangsöffnung herum auch auf sich selbst zurückgefaltet werden, um so einen sogenannten Falzbördelring zu bilden, welcher einen verdickten Bereich darstellt und so eine Verformungsbegrenzungsvorrichtung bildet.

Ferner sei ergänzend noch auf folgenden hingewiesen: erfindungsgemäß werden die Abdichtsicken der beiden das Lagenpaar bildenden Blechlagen aufeinander zu vorspringen; bei nicht erfindungsgemäßen ausführungsbeispielen wäre es uber auch möglich, dass die Abdichtsicken der einander unmittelbar benachbarten Blechlagen nicht auf einander zu vorspringen, sondern von einander weg weisen - in diesem Fall ist es nur erforderlich, an beiden das besagte Lagenpaar bildenden Blechlagen neben deren Abdichtsicken im Bereich des außerhalb des Lagenpaares liegenden Stoppers mit in dieselbe Richtung (nämlich in Richtung weg vom Stopper) vorspringenden Abkröpfungen zu versehen.

Zum Stand der Technik ist noch zu bemerken, daß es bei Zylinderkopfdichtungen mit zwei Funktionslagen bekannt ist, zwischen diesen eine Blechlage anzuordnen, die mit einem Stopper für die Abdichtsicken beider Funktionslagen versehen ist, wobei der Stopper die Form eines aufgeschweißten Rings oder eines Falzbördelrings hat und die mit dem Stopper versehene Blechlage neben dem Stopper so abgekröpft ist, daß der Stopper für die Abdichtsicken beider Funktionslagen dieselbe Wirkung hat, das heißt bezüglich der beiden Funktionslagen eine Mittellage einnimmt.

Bei den Ausführungsformen der erfindungsgemäßen Flachdichtung liegt die erste Blechlage zwischen der zweiten und der dritten Blechlage, und der Stopper ist an der dritten Blechlage vorgesehen, so daß die abgekröpfte erste Blechlage nicht an einer der Hauptoberflächen der Dichtungsplatte liegt. Nicht erfindungsgemäß könnte der Stopper aber auch an der ersten Blechlage vorgesehen sein, und zwar auf derjenigen Seite der ersten Blechlage, von der der von der Abkröpfung gebildete Vorsprung weg weist (und zwar unabhängig davon, ob der Stopper von einem aufgeschweißten Blechring, von einem auf die erste Blechlage zurückgefalteten Ringbereich der ersten Blechlage oder von aus der ersten Blechlage herausgeprägten Erhebungen gebildet wird).

Mit dem außerhalb des von den beiden Funktionslagen liegenden Stopper läßt sich auch eine Abdichtsicke der dritten Blechlage (die dann also gleichfalls eine Funktionslage bildet) vor einer übermäßigen Abflachung schützen, und zwar unabhängig davon, ob die Abdichtsicke der dritten Blechlage in Richtung auf die erste Blechlage oder in die von der ersten Blechlage weg weisende Richtung vorspringt.

Die Erfindung läßt sich auf vierlagige Flachdichtungen anwenden, welche dann so gestaltet sind, daß auf der von der ersten Blechlage abgekehrten

Seite der dritten Blechlage eine vierte Blechlage angeordnet ist, welche gleichfalls eine die Durchgangsöffnung umschließende sowie durch die Verformungsbegrenzungsvorrichtung vor einer übermäßigen Abflachung geschützte Abdichtsicke aufweist, wobei die Konstruktion dann besonders einfach wird, wenn die Abdichtsicke der vierten Blechlage in Richtung auf die dritte Blechlage vorspringt.

Ähnlich wie bei dem vorstehend erörterten Stand der Technik ist die dritte Blechlage im Bereich zwischen den Abdichtsicken der ersten und der vierten Blechlage eben und steht der Stopper über beide Hauptoberflächen der dritten Blechlage über, um so eine Verformungsbegrenzungsvorrichtung zu schaffen, durch die die Abdichtsicken der ersten und zweiten sowie der vierten Blechlage vor übermäßigen Abflachungen geschützt werden. Dabei springt die Abdichtsicke der vierten Blechlage in Richtung auf die dritte Blechlage vor, oder nicht erfindungsgemäß in die von der dritten Blechlage weg weisende Richtung.

Wie sich aus den beigefügten Zeichnungen und deren Beschreibung noch ergeben wird, eignet sich das Grundkonzept der vorliegenden Erfindung auch für Flachdichtungen mit einer noch größeren Anzahl von Blechlagen, insbesondere für vierlagige Flachdichtungen mit vier Funktionslagen und fünflagige Flachdichtungen mit vier Funktionslagen und einer zwischen jeweils zwei Lagenpaaren von Funktionslagen angeordneten Blechlage, welche mit einem in beide Richtungen wirkenden Stopper versehen ist.

In den meisten Fällen wird der Stopper so ausgebildet sein, daß er die Durchgangsöffnung ringförmig umschließt, obwohl auch Stopper bekannt sind, welche aus mehreren Abschnitten bestehen, welche in Umfangsrichtung der Durchgangsöffnung im Abstand voneinander angeordnet sind - im letztgenannten Fall muß die erfindungsgemäß vorzusehende Abkröpfung gleichfalls nicht ringförmig sein, sondern kann mehrere abgekröpfte Abschnitte aufweisen, die in Umfangsrichtung der Durchgangsöffnung im Abstand von einander angeordnet sind.

Grundsätzlich kann der Stopper auf der der Durchgangsöffnung zugewandten Seite oder der von der Durchgangsöffnung abgewandten Seite der zu schützenden Abdichtsicken liegen, wobei die erste Alternative zu bevorzugen ist.

Nur der Vollständigkeit halber sei noch darauf hinzuweisenden, daß die in Rede stehenden Abdichtsicken als sogenannte Vollsicken oder als sogenannte Halbsicken ausgebildet sein können - Vollsicken haben im Querschnitt einen ungefähr kreisbogenförmigen oder rechteckigen Querschnitt, Halbsicken einen Querschnitt, welcher einem liegenden S oder Z ähnlich ist.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung mehrerer besonders vorteilhafter Ausführungsformen der erfindungsgemäßen Flachdichtung, bei denen es sich insbesondere um Zylinderkopfdichtungen handeln soll; in der Zeichnung zeigen:
- Fig. 1: einen Schnitt durch einen Bereich einer dreilagigen nicht erfindungs- gemäßen Dichtung, welcher an eine abzudichtende Durch- gangsöffnung angrenzt, wobei bei dieser Dichtung alle drei Lagen als Funktionslagen gestaltet sind;
- Fig. 2: eine der Fig. 1 entsprechende Schnittdarstellung durch eine vierlagige Dichtung mit vier Funktionslagen;
- Fig. 2A: eine perspektivische Darstellung eines Teils der zweitobersten Lage der in Fig. 2 gezeigten Dichtung, jedoch in größerem Maßstab als in Fig. 2;
- Fig. 3: eine der Fig. 1 entsprechende Schnittdarstellung einer vier- lagigen erfindungsgemäßen Dichtung mit drei Funktionslagen;
- Fig. 4: eine der Fig. 1 entsprechende Schnittdarstellung einer fünf- lagigen Dichtung mit vier Funktionslagen;
- Fig. 5: eine der Fig. 1 entsprechende Schnittdarstellung einer alter- nativen Ausführungsform einer dreilagigen Dichtung mit drei Funktionslagen, und
- Fig. 6: eine Abwandlung der in Fig. 5 gezeigten Dichtung, gleichfalls im Schnitt.

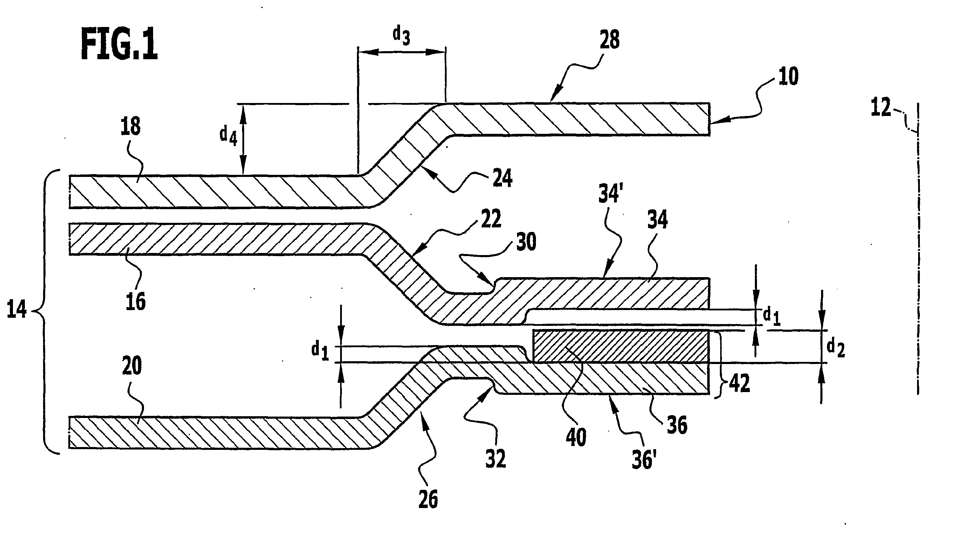

Der in Fig. 1 im Schnitt gezeigte Teil einer dreilagigen Zylinderkopfdichtung grenzt an eine kreisrunde (in einer Draufsicht auf die Dichtung) Durchgangsöffnung 10 mit einer Achse 12 an, wobei es sich bei dieser Durchgangsöffnung um eine Brennraumöffnung der Zylinderkopfdichtung handeln soll. Die drei Lagen der Dichtung bilden zusammen eine Dichtungsplatte 14, das heißt die Dichtungsplattenebene verläuft in Fig. 1 horizontal. Bei den drei Lagen handelt es sich um eine innenliegende erste Metallblechlage 16, die zwischen einer zweiten und einer dritten Metallblechlage 18 bzw. 20 angeordnet ist, welche bei dieser Zylinderkopfdichtung deren Hauptoberflächen bilden. Jede der drei Blechlagen weist eine Abdichtsicke 22 bzw. 24 bzw. 26 auf, welche in diesem Fall als sogenannte Halbsicke gestaltet ist und die Durchgangsöffnung 10 kreisringförmig (in einer Draufsicht auf die Dichtungsplatte 14) umschließen soll.

An die Abdichtsicke 24 der zweiten Blechlage 18 schließt sich ein an die Durchgangsöffnung 10 angrenzender ebener und parallel zur Dichtungsplattenebene verlaufender Ringbereich 28 der Blechlage 18 an, während entsprechende Ringbereiche der ersten und der dritten Blechlage 16 bzw. 20 Abkröpfungen 30 bzw. 32 aufweisen, an die sich jeweils ein ebener Ringbereich 34 bzw. 36 der betreffenden Blechlage anschließt, der die Durchgangsöffnung 10 kreisringförmig umschließt und erfindungsgemäß einen Vorsprung 34' bzw. 36' bildet; dabei weisen die beiden Vorsprünge 34' und 36' von einander weg, da die erste Blechlage 16 in Richtung auf die zweite Blechlage 18 abgekröpft wurde, die dritte Blechlage 20 hingegen in die von der ersten Blechlage 16 weg weisende Richtung. Auf dem Ringbereich der dritten Blechlage 20 ist ein aus einem Metallblech ausgestanzter, die Durchgangsöffnung 10 kreisringförmig umschließender Stopper 40 zum Beispiel durch Punktschweißen oder durch eine kreisringförmige Laserschweißnaht befestigt, alternativ könnte ein solcher Stopper aber auch auf der Unterseite des Ringbereichs 34 der ersten Blechlage 16 angebracht sein. Bei der dargestellten

Ausführungsform bilden der Ringbereich 36 und der Stopper 40 zusammen eine Verformungsbegrenzungsvorrichtung 42.

Unter der Voraussetzung, daß die Höhe d₄ aller Abdichtsicken 22, 24, 26 gleich groß ist, sind auch die Höhen d₁ der Abkröpfungen 30 und 32 bzw. der Vorsprünge 34' und 36' gleich hoch, und außerdem ist die Dicke bzw. Höhe d₂ des Stoppers 40 doppelt so groß wie d₁.

Die Fig. 1 zeigt die Zylinderkopfdichtung im ungepreßten Zustand, das heißt vor dem Einbau und dem Einspannen der Dichtung zwischen einem Motorblock und einem Zylinderkopf; dabei liegen die Blechlagen 16 und 18 radial außerhalb (bezogen auf die Achse 12 der Durchgangsöffnung 10) der Abdichtsicken 22 und 24 gegeneinander an - nur der Deutlichkeit der Darstellung wegen weisen die Blechlagen 16 und 18 in diesem Bereich in Fig. 1 einen Abstand voneinander auf, und Gleiches gilt für die Blechlagen 16 und 20 im Bereich zwischen den Abdichtsicken 22, 26 und den Abkröpfungen 30, 32. Im Zuge des Einbaus und des Einspannens der Zylinderkopfdichtung zwischen Motorblock und Zylinderkopf sowie im Motorbetrieb werden aufgrund der dabei auf die Zylinderkopfdichtung einwirkenden und senkrecht zur Dichtungsplattenebene orientierten Pressungskräfte die Höhen (d₄) der Abdichtsicken 22, 24, 26 vermindert, das heißt die Abdichtsicken werden abgeflacht, wobei eine übermäßige Abflachung einer jeden der drei Abdichtsicken durch die Verformungsbegrenzungsvorrichtung 42 und die Abkröpfung 30 der ersten Blechlage 16 verhindert wird, und zwar auf folgende Weise (für das Folgende soll angenommen werden, daß der nicht dargestellte Motorblock unterhalb und der nicht dargestellte Zylinderkopf oberhalb der Zylinderkopfdichtung liegt):

Im Zuge der Abflachung der Abdichtsicke 26 kommt der Vorsprung 36' zur Anlagen gegen den Motorblock, so daß dann die Abdichtsicke 26 nicht weiter abgeflacht werden kann; außerdem kommt der Stopper 40 zur Anlage gegen den Ringbereich 34 der ersten Blechlage 16, und der Vorsprung 34' der ersten Blechalge 16 kommt zur Anlage gegen den Ringbereich 28 der zweiten Blechlage 18, so daß dann die Abdichtsicken 22 und 24 nicht weiter abgeflacht werden können.

Unabhängig davon, ob der Stopper 40 an der dritten Blechlage 20 oder der ersten Blechlage 16 angebracht ist, liegt der Stopper 40 außerhalb des von der ersten und der zweiten Blechlage 16 bzw. 18 gebildeten Lagenpaares und verhindert in Verbindung mit der Abkröpfung 30 eine übermäßige Abflachung aller drei Abdichtsicken 22, 24 und 26.

Die in Fig. 1 dargestellte Zylinderkopfdichtung könnte ohne Abweichung vom Grundprinzip auch in folgender Weise modifiziert werden: Die dritte Blechlage 20 könnte so abgekröpft werden, daß sie einen gemäß Fig. 1 nach oben gerichteten Vorsprung bildet, der den in Fig. 1 durch den Stopper 40 gebildeten Vorsprung ersetzt, und der Stopper könnte gemäß Fig. 1 rechts von dieser Abkröpfung auf der Unterseite der dritten Blechlage 20 angebracht sein. Durch den Stopper würde dann die Abdichtsicke 26 der dritten Blechlage 20 vor einer übermäßigen Abflachung geschützt, und da die Abkröpfung der Blechlage 20 dann einen gemäß Fig. 1 nach oben weisenden Vorsprung bilden würde, durch den bei gepreßter Zylinderkopfdichtung der Ringbereich 34 der ersten Blechlage 16 abgestützt wird, würde der Vorsprung 34' sowohl die Abdichtsicke 22, als auch die Abdichtsicke 24 vor einer übermäßigen Abflachung schützen.

In Fig. 1 wurde die Höhe d₄ der Abdichtsicken 22, 24, 26 zu groß wiedergegeben, um die Flachdichtung deutlicher darstellen zu können; typischer Weise beträgt bei einer erfindungsgemäßen Zylinderkopfdichtung die Blechstärke, das heißt die Dicke der Blechlagen 16, 18 und 20 0,20 ± 0,05mm, die Breite d₃ der Abdichtsicken 22, 24 und 26 1,0 bis 1,1 mm und die Sickenhöhe d₄ 0,20 bis 0,21 mm.

Statt den Stopper 40 als separaten Blechring herzustellen und auf einer der Blechlagen 16 und 20 zu befestigen, könnte die erste Blechlage 16 oder die dritte Blechlage 20 in Richtung auf die Achse 12 der Durchgangsöffnung 10 verlängert und der dadurch gebildete Ringbereich der betreffenden Blechlage nach unten bzw. nach oben umgebogen und auf die betreffende Blechlage selbst zurückgefaltet werden - bei einer der Fig. 1 entsprechenden Darstellung würde dann der Stopper 40 von einem Bereich der dritten Blechlage 20 gebildet werden, welcher gemäß Fig. 1 rechts in den Ringbereich 36 nahtlos übergeht, und zwar über einen umgebogenen Abschnitt, der im Querschnitt die Gestalt eines liegenden U hat.

Bei einer anderen Modifikation könnten an die Stelle des Stoppers 40 zum Beispiel rippen- oder noppenförmige Vorsprünge treten, die durch Prägen aus dem Ringbereich 36 der dritten Blechlage 20 herausgeformt wurden und in der gleichen Richtung und in gleichem Maße über die dritte Blechlage 20 überstehen wie der Stopper 40; alternativ könnten aus dem Ringbereich 34 der ersten Blechlage 16 Vorsprünge herausgeprägt werden, die in Richtung auf die dritte Blechlage 20 vorstehen.

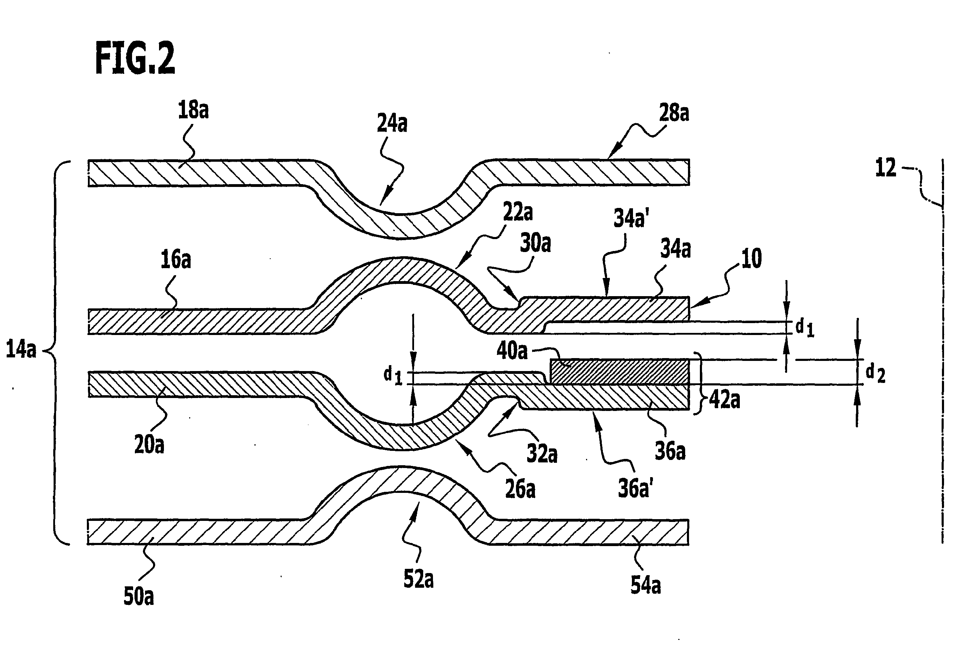

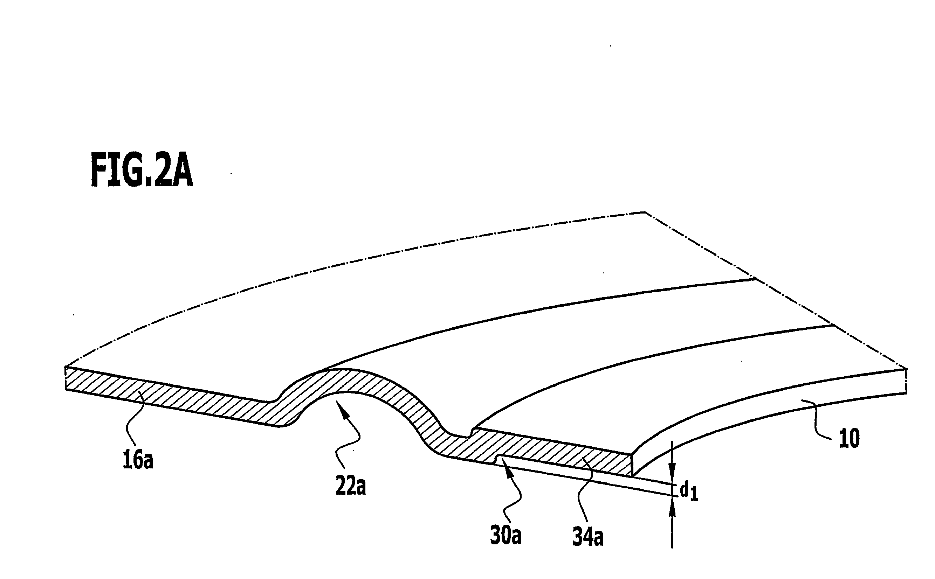

Die in den Fig. 2 bis 6 dargestellten Ausführungsformen sollen im folgenden nur insoweit beschrieben werden, als sie von der ersten Ausführungsform gemäß Fig. 1 abweichen, weshalb in den Fig. 2 bis 6 dieselben Bezugszeichen wie in Fig. 1 verwendet wurden, jedoch unter Hinzufügung des Buchstabens a bzw. b bzw. c bzw. d bzw. e.

Während die in Fig. 1 gezeigte Zylinderkopfdichtung als Abdichtsicken sogenannte Halbsicken aufweist, sind bei den anderen zeichnerisch dargestellten Ausführungsformen die Abdichtsicken als sogenannte Vollsicken gestaltet.

Die Fig. 2 zeigt einen Schnitt durch einen Bereich einer vierlagigen Zylinderkopfdichtung, wobei es sich bei allen vier Lagen um mit Abdichtsicken versehene Funktionslagen handelt. Analog zu der Ausführungsform gemäß Fig. 1 bilden eine erste Blechlage 16a und eine zweite Blechlage 18a ein Lagenpaar, jedoch mit als Vollsicken gestalteten Abdichtsicken 22a, 24a, welche in entgegengesetzte Richtungen vorspringen, und zwar aufeinander zu; eine Abdichtsicke 26a einer dritten Blechlage 20a ist wiederum entgegengesetzt zur Abdichtsicke 22a der ersten Blechlage 16a orientiert und springt in eine Richtung vor, welche von der ersten Blechlage 16a weg weist. Eine vierte Blechlage 50a hat wieder eine in Richtung auf das Innere der Dichtungsplatte 14a vorspringende Abdichtsicke 52a, und ist die in Fig. 2 dargestellte Zylinderkopfdichtung zu einer Mittelebene, welche zwischen den Blechlagen 16a und 20a verläuft, spiegelsymmetrisch gestaltet, sieht man einmal von dem Stopper 40a ab.

Hinsichtlich des Schutzes der Abdichtsicken 22a, 24a und 26a wirkt die Verformungsbegrenzungsvorrichtung 42a in derselben Weise wie die Verformungsbegrenzungsvorrichtung 42 der Zylinderkopfdichtung gemäß Fig. 1, sie schützt jedoch auch die Abdichtsicke 52a der vierten Blechlage 50a vor einer übermäßigen Abflachung, weil bei gepreßter Zylinderkopfdichtung der Vorsprung 36a' der dritten Blechlage 20a gegen einen Ringbereich 54a der vierten Blechlage 50a anliegt.

In Fig. 2A wurde die erste Blechlage 16a der Ausführungsform gemäß Fig. 2 in einem isometrischen Schnitt dargestellt, wobei die Fig. 2A auch repräsentativ für die Gestaltung der dritten Blechlage 20a ist.

Auch für die in Fig. 2 dargestellte Zylinderkopfdichtung gilt ebenso wie für die im folgenden noch zu beschreibenden Ausführungsformen, daß die Anordnung und Gestaltung des Stoppers so modifiziert werden kann, wie dies im Zusammenhang mit der Beschreibung der Fig. 1 dargelegt wurde.

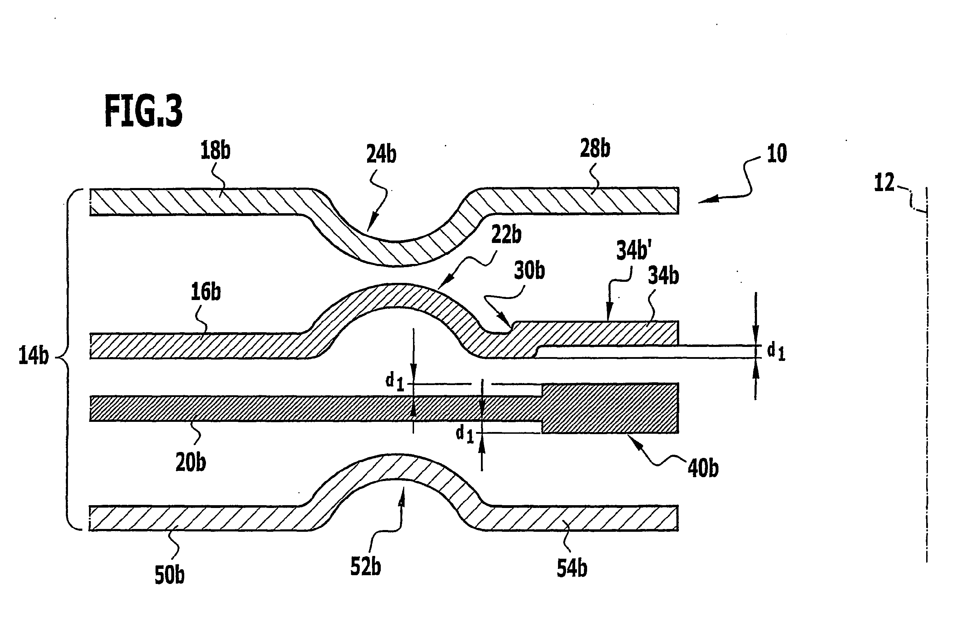

Die Fig. 3 zeigt eine vierlagige erfindungsgemäße Zylinderkopfdichtung, welche jedoch nur drei Funktionslagen besitzt, nämlich eine erste Blechlage 16b, eine zweite Blechlage 18b und eine vierte Blechlage 50b, während es sich bei einer zwischen der ersten und der vierten Blechlage angeordneten dritten Blechlage 20b um ein sogenanntes Trägerblech handelt, welches bis auf einen Stopper 40b glatt und eben ausgebildet ist.

Bei der Ausführungsform gemäß Fig. 3 soll es sich bei dem Stopper 40b um einen durch Prägen verdickten Ringbereich der dritten Blechlage 20b handeln, der über beide Hauptoberflächen der dritten Blechlage 20b, das heißt beidseitig über diese Blechlage, vorsteht, um in Verbindung mit der Abkröpfung 30b der ersten Blechalge 16b alle drei Abdichtsicken 22b, 24b und 52b vor einer übermäßigen Abflachung zu schützen.

Die in Fig. 3 dargestellte Ausführungsform stellt die erfindungsgemäße
Ausführungsform der Flächdichtung dar, weshalb alle in Fig. 3 zeichnerisch wiedergegebenen Merkmale dieser Dichtung in Kombination als Gestaltungsmerkmale zu gelten haben.

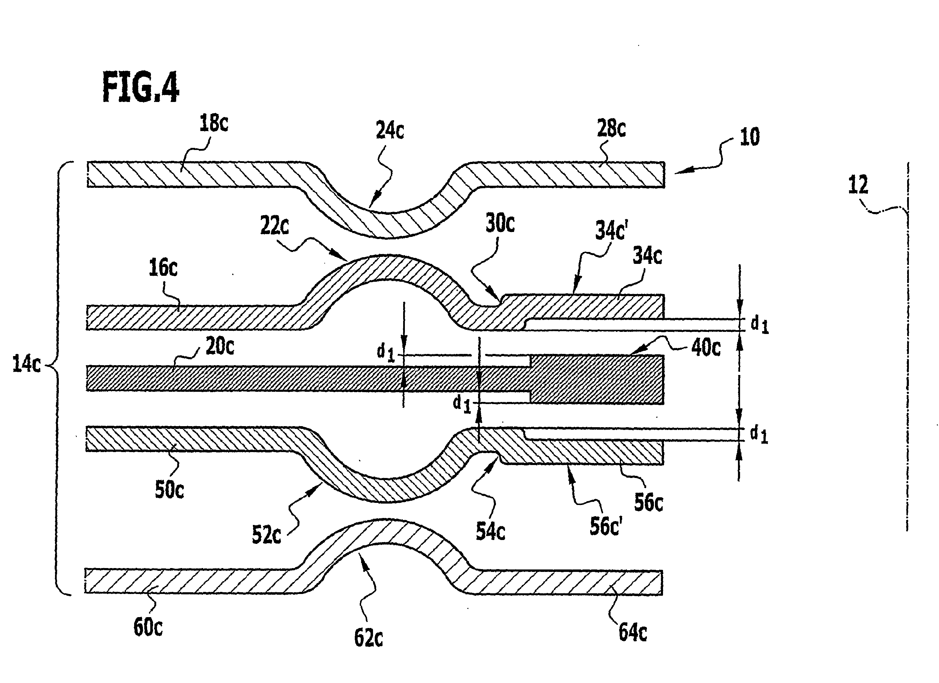

Die in Fig. 4 dargestellte nicht erfindungsgemäße Zylinderkopfdichtung ist fünflagig und hat vier Funktionslagen sowie ein mit einem Stopper versehenes glattes Trägerblech. Eine erste Blechlage 16c, eine zweite Blechlage 18c und eine vierte Blechlage 50c stellen Funktionslagen dar und entsprechen den Blechlagen 16a, 18a und 20a der Ausführungsform nach Fig. 2, während eine fünfte Blechlage 60c der vierten Blechlage 50a der Ausführungsform gemäß Fig. 2 entspricht. Eine dritte Blechlage 20c entspricht wiederum der dritten Blechlage 20b der Ausführungsform gemäß Fig. 3, und zwar einschließlich ihres Stoppers 40c.

Da der Stopper 40c beidseitig über die dritte Blechlage 20c, das heißt das Trägerblech, übersteht, schützt er in Verbindung mit der Abkröpfung 30c der ersten Blechlage 16c und einer Abkröpfung 54c der vierten Blechlage 50c nicht nur die Sicken 22c, 24c und 52c der ersten, der zweiten und der vierten Blechlage vor einer übermäßigen Abflachung, sondern auch eine Abdichtsicke 52c der fünften Blechlage 60c, weil ein Vorsprung 56c' der vierten Blechlage 50c bei gepreßter Zylinderkopfdichtung gegen einen Ringbereich 64c der fünften Blechlage 60c anliegt.

Ein besonderes Merkmal der Zylinderkopfdichtung gemäß Fig. 4 ist darin zu sehen, daß diese vollständig spiegelsymmetrisch zu einer Mittelebene der dritten Blechlage 20c ausgebildet ist.

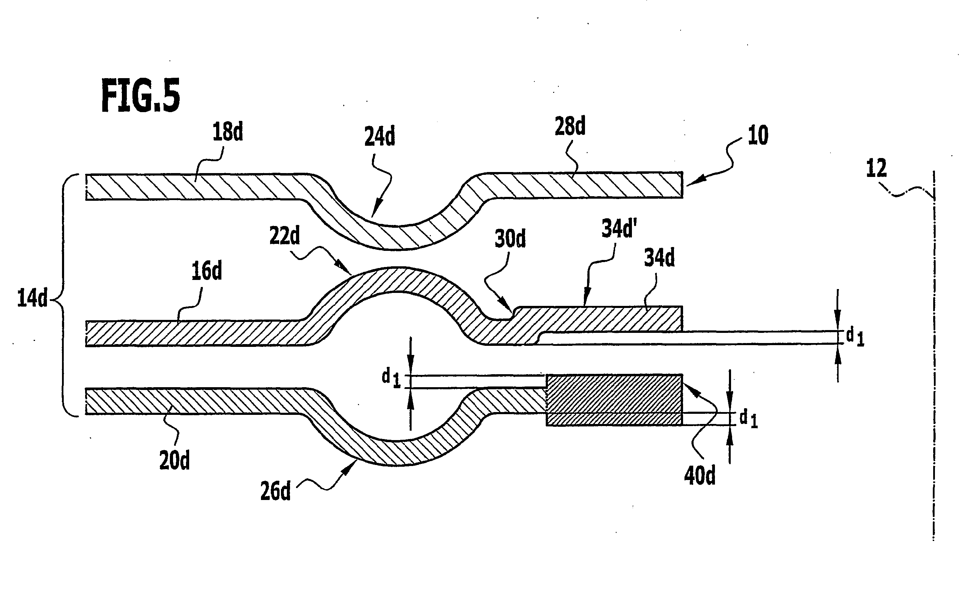

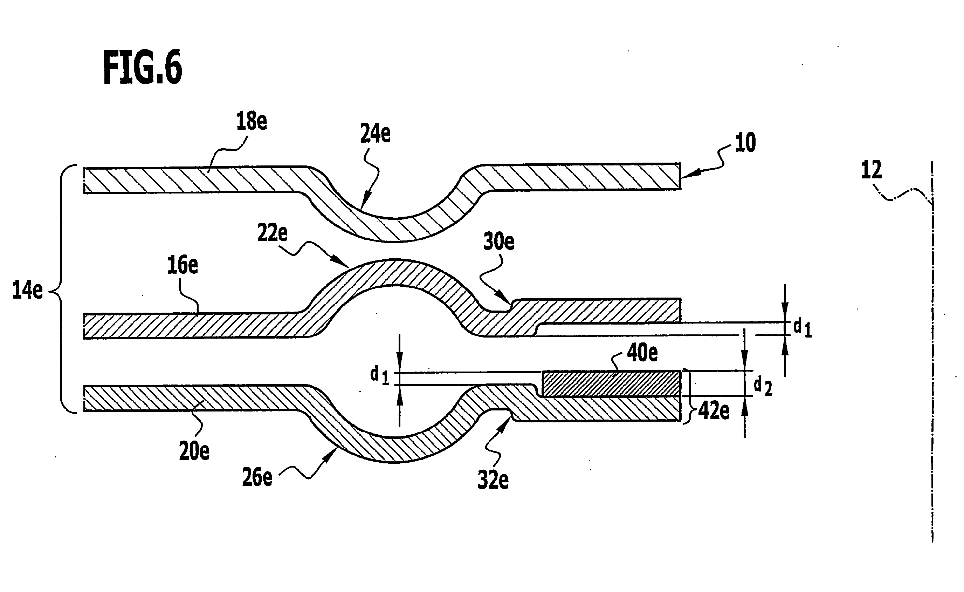

Die in den Fig. 5 und 6 dargestellten nicht erfindungsgemäßen Ausführungsformen der Flachdichtung unterscheiden sich nur in der Gestaltung des Stoppers voneinander und von der Ausführungsform gemäß Fig. 1 in der Verwendung von Vollsicken anstelle von Halbsicken als Abdichtsicken.

Bei der dreilagigen Flachdichtung gemäß Fig. 5 bilden wieder alle drei Blechlagen 16d, 18d und 20d jeweils eine Funktionslage mit als Vollsicken gestalteten Abdichtsicken 22d, 24d und 26d, jedoch ist ein an der dritten Blechlage 20d vorgesehener Stopper 40d so ausgebildet, daß er über die beiden Hauptoberflächen der dritten Blechlage 20d übersteht, so daß eine Abkröpfung wie die Abkröpfung 32 der dritten Blechlage 20 der Zylinderkopfdichtung gemäß Fig. 1 entfallen kann. Der Stopper 40d kann als ausgestanzter Blechring hergestellt und dann mit der dritten Blechlage 20d zum Beispiel durch Schweißen verbunden werden, es ist aber auch möglich, an der dritten Blechlage 20d durch Prägen einen verdickten Bereich zu erzeugen, welcher den Stopper 40d bildet.

Bei der Ausführungsform gemäß Fig. 6 treten an die Stelle des eine Verformungsbegrenzungsvorrichtung bildenden Stoppers 40d der Ausführungsform gemäß Fig. 5 ein Stopper 40e in Verbindung mit einer Abkröpfung 32e der dritten Blechlage 20e, die zusammen eine Verformungsbegrenzungsvorrichtung 42e bilden, die in Verbindung mit der Abkröpfung 30e der ersten Blechlage 16e alle drei Abdichtsicken 22e, 24e und 26e vor einer übermäßigen Abflachung schützen.

Nur der Vollständigkeit halber sei noch erwähnt, daß die Höhe der Abkröpfungen erfindungsgemäßer Flachdichtungen typischer Weise im Bereich zwischen 20 und 150 µm liegt, vorzugsweise im Bereich zwischen 25 und 100 µm.

Im Rahmen der Erfindung liegt es nicht, die Abdichtsicken nicht übereinander (in einer Draufsicht auf die Flachdichtung) anzuordnen, sondern seitlich gegeneinander zu versetzen.

## Patentansprüche

1. Flachdichtung mit einer Dichtungsplatte, in der wenigstens eine Durchgangsöffnung (10) vorgesehen ist und die mindestens in der Umgebung dieser Durchgangsöffnung wenigstens vier übereinander angeordnete Metallblechlagen (16b, 18b, 20b, 50b) aufweist, wobei mindestens eine erste und eine zweite sowie eine vierte (16b, 18b, 50b) dieser Blechlagen jeweils mindestens eine die Durchgangsöffnung umschließende, höhenelastische Abdichtsicke (22b, 24b, 52b) aufweisen und diese Abdichtsicken übereinander angeordnet sind und die Abdichtsicken (22b, 24b) der ersten und der zweiten Blechlage (16b, 18b) in Richtung aufeinander zu vorspringen, wobei für diese Abdichtsicken (22b, 24b, 52b) eine beim Einbau und im Betrieb der Flachdichtung die Verformung der Abdichtsicken in Richtung senkrecht zur Dichtungsplattenebene zulassende sowie diese Verformung begrenzende, einen Verformungsstopper (40b) aufweisende Verformungsbegrenzungsvorrichtung (34b', 40b) vorgesehen ist, die erste und die zweite Blechlage (16b, 18b) ein Lagenpaar bilden und einander unmittelbar benachbart sind, die dritte Blechlage (20b) zwischen der ersten und der vierten Blechlage (16b, 50b) angeordnet ist, wobei diese dritte Blechlage (20b) unmittelbar benachbart zu der vierten Blechlage (50b) vorgeschen ist, und der Stopper (40b) außerhalb dieses Lagenpaares, jedoch der ersten Blechlage (16b) unmittelbar benachbart an der dritten Blechlage (20b) vorgesehen ist und die erste Blechlage (16b) neben ihrer Abdichtsicke (22b) im Bereich des Stoppers (40b) einen sich in Umfangsrichtung der Durchgangsöffnung erstreckenden, in Richtung auf die zweite Blechlage (18b) vorspringenden Vorsprung (34b') aufweist, der bei ungepresster Flachdichtung von der Abdichtsicke (22b) der ersten Blechlage (16b) überragt wird, und wobei die dritte Blechlage (20b) im Bereich zwischen den Abdichtsicken (22b, 52b) der ersten und der vierten Blechlage (16b, 50b) eben ist und der Stopper (40b) über beide Hauptoberflächen der dritten Blechlage (20b) übersteht, so dass ein den Vorsprung bildender Ringbereich (34b') der ersten Blechlage (16b) zusammen mit dem Stopper (40b) eine für die Abdichtsicken (22b, 24b, 52b) der ersten, zweiten und vierten Blechlage (16b, 18b, 50b) wirksame Verformungsbegrenzungsvorrichtung (34b', 40b) bildet, wobei die Abdichtsicke (52b) der vierten Blechlage (50b) in Richtung auf die dritte Blechlage (20b) vorspringt.

2. Flachdichtung nach Anspruch 1, **dadurch gekennzeichnet, dass** die erste Blechlage (16b) zur Bildung des Vorsprungs eine sich in Umfangsrichtung der Durchgangsöffnung (10) erstreckende Abkröpfung (30b) aufweist.

3. Flachdichtung nach Anspruch 1 oder 2, **dadurch gekennzeichnet, dass** die dritte Blechlage (20b) der ersten Blechlage (16b) unmittelbar benachbart ist.

4. Flachdichtung nach einem der vorstehenden Ansprüche, **dadurch gekennzeichnet, dass** der Stopper (40b) die Durchgangsöffnung (10) ringförmig umschließt.

5. Flachdichtung nach einem der vorstehenden Ansprüche, **dadurch gekennzeichnet, dass** der Stopper (40b) - in einer Draufsicht auf die Flachdichtung - zwischen der Durchgangsöffnung (10) und den Abdichtsicken (22b, 24b, 52b) angeordnet ist.

6. Flachdichtung nach einem der vorstehenden Ansprüche, **dadurch gekennzeichnet, dass** die Abdichtsicken (22b, 24b, 52b) als Vollsicken ausgebildet sind.

## Claims

1. Flat gasket with a gasket plate having at least one through-opening (10) provided therein and having, at least in the surroundings of said through-opening, at least four sheet metal layers (16b, 18b, 20b, 50b) arranged one above the other, wherein at least a first and a second and a fourth (16b, 18b, 50b) of said sheet metal layers each have at least one sealing bead (22b, 24b, 52b) surrounding the through-opening and being elastically deformable in its height and said sealing beads are arranged one above the other and the sealing beads (22b, 24b) of the first and second sheet metal layers (16b, 18b) project in a direction towards one another, wherein a deformation limiting device (34b', 40b) is provided for said sealing beads (22b, 24b, 52b), said deformation limiting device allowing and delimiting the deformation of the sealing beads in a direction perpendicular to the plane of the gasket plate during installation and operation of the flat gasket and having a deformation stopper (40b), the first and second sheet metal layers (16b, 18b) form a pair of layers and are directly adjacent to one another, the third sheet metal layer (20b) is arranged between the first and fourth sheet metal layers (16b, 50b), wherein said third sheet metal layer (20b) is provided directly adjacent to the fourth sheet metal layer (50b), and the stopper (40b) is provided outside of said pair of layers, but directly adjacent to the first sheet metal layer (16b), at the third sheet metal layer (20b), and the first sheet metal layer (16b) has beside its sealing bead (22b) in the area of the stopper (40b) a projection (34b') extending in a peripheral direction of the through-opening and projecting in a direction towards the second sheet metal layer (18b), the sealing bead (22b) of the first sheet metal layer (16b) protruding beyond said projection when the flat gasket is uncompressed, and wherein the third sheet metal layer (20b) is planar in the area between the sealing beads (22b, 52b) of the first and fourth sheet metal layers (16b, 50b) and the stopper (40b) projects beyond the two major surfaces of the third sheet metal layer (20b), so that an annular portion (34b') of the first sheet metal layer (16b) which forms the projection constitutes, together with the stopper (40b), a deformation limiting device (34b', 40b) effective for the sealing beads (22b, 24b, 52b) of the first, second and fourth sheet metal layers (16b, 18b, 50b), wherein the sealing bead (52b) of the fourth sheet metal layer (50b) projects in a direction towards the third sheet metal layer (20b).

2. Flat gasket in accordance with claim 1, **characterized in that** for forming the projection, the first sheet metal layer (16b) has an offset (30b) extending in a peripheral direction of the through-opening (10).

3. Flat gasket in accordance with claim 1 or 2, **characterized in that** the third sheet metal layer (20b) is directly adjacent to the first sheet metal layer (16b).

4. Flat gasket in accordance with any one of the preceding claims, **characterized in that** the stopper (40b) surrounds the through-opening (10) in a ring shape.

5. Flat gasket in accordance with any one of the preceding claims, **characterized in that** the stopper (40b) - in a plan view of the flat gasket - is arranged between the through-opening (10) and the sealing beads (22b, 24b, 52b).

6. Flat gasket in accordance with any one of the preceding claims, **characterized in that** the sealing beads (22b, 24b, 52b) are configured as full-beads.

## Revendications

1. Joint plat comprenant une plaque d'étanchéité, dans laquelle au moins une ouverture de passage (10) est prévue et qui présente au moins dans l'environnement de cette ouverture de passage au moins quatre couches de tôle métallique (16b, 18b, 20b, 50b) disposées les unes au-dessus des autres, au moins une première et une seconde ainsi qu'une quatrième (16b, 18b, 50b) de ces couches de tôle présentant à chaque fois au moins une moulure d'étanchéité élastiques en hauteur (22b, 24b, 52b) entourant l'ouverture de passage ces moulures d'étanchéité étant disposées les unes au-dessus des autres, les moulures d'étanchéité (22b, 24b) de la première et de la seconde couches de tôle (16b, 18b) avançant les unes vers les autres, un dispositif de limitation de déformation (34b', 40b) autorisant, lors du montage et pendant le fonctionnement du joint plat, la déformation des moulures d'étanchéité dans la direction perpendiculaire au plan de la plaque d'étanchéité et limitant cette déformation, dispositif de délimitation de déformation (34b', 40b) comprenant un stoppeur de déformation (40b) étant prévu pour ces moulures d'étanchéité (22b, 24b, 52b), la première et la seconde couche de tôle (16b, 18b) formant une paire de couches et étant directement voisines l'une de l'autre, la troisième couches de tôle (20b) étant disposée entre la première et la quatrième couche de tôle (16b, 50b), cette troisième couche de tôle (20b) étant prévue dans le voisinage immédiat de la quatrième couche de tôle (50b), et le stoppeur (40b) étant prévu à l'extérieur de cette paire de couches, au voisinage immédiat de la première couche de tôle (16b), sur la troisième couche de tôle (20b) et la première couche de tôle (16b) présentant à côté de sa moulure d'étanchéité (22b) dans la zone du stoppeur (40b) une saillie (34b') s'étendant dans le sens périphérique de l'ouverture de passage, dépassant en direction de la seconde couche de tôle (18b), laquelle saillie est dépassée, lorsque le joint n'est pas comprimé, par la moulure d'étanchéité (22b) de la première couche de tôle (16b), et la troisième couche de tôle (20b) étant plane dans la zone entre les moulures d'étanchéité (22b, 52b) de la première et de la quatrième couches de tôle (16b, 50b) et le stoppeur (40b) débordant des deux surfaces principales de la troisième couche de tôle (20b), de sorte qu'une zone annulaire (34b') formant la saillie de la première couche de tôle (16b) forme conjointement avec le stoppeur (40b) un dispositif de limitation de déformation (34b', 40b) efficace pour les moulures d'étanchéité (22b, 24b, 52b) de la première, de la seconde et de la quatrième couches de tôle (16b, 18b, 50b), la moulure d'étanchéité (52b) de la quatrième couche de tôle (50b) débordant en direction de la troisième couche de tôle (20b).

2. Joint plat selon la revendication 1, **caractérisé en ce que** la première couche de tôle (16b) présente pour la formation de la saillie un coude (30b) s'étendant dans le sens périphérique de l'ouverture de passage (10).

3. Joint plat selon la revendication 1 ou 2, **caractérisé en ce que** la troisième couche de tôle (20b) est directement voisine de la première couche de tôle (16b).

4. Joint plat selon l'une quelconque des revendications précédentes, **caractérisé en ce que** le stoppeur (40b) entoure l'ouverture de passage (10) à la façon d'un anneau.

5. Joint plat selon l'une quelconque des revendications précédentes, **caractérisé en ce que** le stoppeur (40b) est disposé dans une vue en élevation sur le joint plat entre l'ouverture de passage (10) et les moulures d'étanchéité (22b, 24b, 52b).

6. Joint plat selon l'une quelconque des revendications précédentes, **caractérisé en ce que** les moulures d'étanchéité (22b, 24b, 52b) sont conçues sous forme de moulures pleines.
